# EUROPEAN PATENT SPECIFICATION

(11) **EP 4 506 215 B1**
(45) Date of publication and mention of the grant of the patent: **06.05.2026**
(21) Application number: 23784341.2
(22) Date of filing: 07.04.2023
(51) Int. Cl.: B60R 25/04, B60R 25/20, B60R 25/23, B60R 25/25

(54) **VEHICLE TRAVELING CONTROL METHOD AND APPARATUS, AND ELECTRONIC DEVICE**
VERFAHREN UND VORRICHTUNG ZUR FAHRZEUGFAHRTSTEUERUNG UND ELEKTRONISCHE VORRICHTUNG
PROCÉDÉ ET APPAREIL DE COMMANDE DE DÉPLACEMENT DE VÉHICULE, ET DISPOSITIF ÉLECTRONIQUE

(30) Priority: 07.04.2022 CN 202210361556
(43) Date of publication of application: 12.02.2025
(73) Proprietor: Great Wall Motor Company Limited, Baoding, Hebei 071000 (CN)
(72) Inventor: ZHANG, Jie, Baoding, Hebei 071000 (CN)
(74) Representative: Klunker IP Patentanwälte PartG mbB
(86) International application number: PCT/CN2023/086770
(87) International publication number: WO 2023/193778

(56) References cited:
- CN-A- 101 337 534
- CN-A- 101 934 779
- CN-A- 105 539 367
- CN-A- 106 004 791
- CN-A- 106 004 791
- CN-A- 107 415 892
- CN-A- 107 521 456
- CN-A- 111 645 631
- CN-A- 113 978 411
- CN-A- 114 084 095
- CN-A- 115 214 537
- CN-B- 110 194 123
- DE-A1- 102016 221 312
- US-A1- 2003 222 759
- US-B2- 10 421 435

## Description

### TECHNICAL FIELD

The present invention relates to a method and a device for controlling a vehicle to drive, an electronic device, and a vehicle.

### BACKGROUND

In order to improve the market competitiveness of vehicles, most vehicles are equipped with a keyless start function, the keyless start button is usually configured on the vehicle console. User presses the keyless start button to achieve simple ignition, which increases the convenience of vehicle starting compared to the method of starting the vehicle with a physical key.

However, at present, when performing the keyless starting, in order to achieve the anti-theft function, usually after the user presses the keyless start button, the main control unit of the vehicle detects the physical key of the vehicle. If the physical key can be detected, the vehicle is controlled to start to prevent theft.

However, in some practical applications, there will be a scenario where the user forgets to bring the physical key but needs to start the vehicle. At this time, since the user does not bring the physical key, the vehicle cannot be started, the reliability of vehicle start is low, and the user experience is reduced.

CN 106 004 791 A discloses a vehicle control method and a corresponding vehicle control apparatus for vehicles with keyless entry and keyless start. When it is detected that the vehicle is in a keyless start (keyless activation) state, for example when a vehicle start signal has been received but no wireless radio frequency signal of the key is detected, an in-vehicle single-chip microcomputer initiates vehicle owner information authentication based on owner data stored in a memory, such as name, ID card number, information authentication password and fingerprint. A vehicle display shows a vehicle owner information authentication interface through which the vehicle owner can input a password and/or fingerprint; if the authentication information matches preset owner information, normal operation of the vehicle is allowed, whereas if the vehicle owner information authentication is unsuccessful, the controller sends an automatic brake command so that a brake device automatically stops the vehicle. In further implementations, after unsuccessful authentication the vehicle transmits keyless activation prompt information to a mobile terminal of the owner and the owner can, via the mobile terminal, send a parking command and window or door lock commands to the vehicle so that the vehicle is stopped and locked and no operation is allowed.

### SUMMARY

In view of this, it is an object of the present invention provides a method and a corresponding device for controlling a vehicle to drive, an electronic device, and a vehicle, to solve the problem that if the user does not bring a physical key, the vehicle cannot be started, the vehicle starting reliability is low, and the user experience is reduced.

The object is achieved with the features of independent claim 1 regarding the method for controlling a vehicle to drive, of independent claim 12 regarding the device for controlling a vehicle to drive, of independent claim 14 regarding the electronic device, of independent claim 15regarding the vehicle. Further embodiments are defined in the dependent claims.

Compared with the prior art, the present invention has the following beneficial effects:
The present invention provides a method and a corresponding device for controlling the vehicle to drive and an electronic device, when it is determined that the preset keyless start conditions are met, the keyless start mode is entered, and the anti-theft verification operation is skipped to directly control the vehicle to start if a keyless start instruction is received, thereby ensuring that the driver can start the vehicle without a physical key, and the vehicle start reliability is high, which improves the user experience. Further, after the vehicle is started, the identity verification of the driver in the vehicle is authenticated. If the verification is passed, an instruction to allow the vehicle to drive is sent to the vehicle drive control unit on the vehicle, so that the vehicle drive control unit responds to the driver instruction of the driver and controls the vehicle to drive according to the driver instruction of the driver. That is, the vehicle is allowed to drive only after it is determined that the driver is legal, the anti-theft function is realized and the safety of vehicle driving is ensured.

### BRIEF DESCRIPTION OF THE DRAWINGS

In order to more clearly illustrate the technical solutions of the present invention or the prior art, the following will briefly introduce the drawings required for use in the description.
FIG. 1 is a flow chart of a method for controlling a vehicle to drive;
FIG. 2 is a flow chart of another method for controlling a vehicle to drive;
FIG. 3 is a flow chart of another method for controlling a vehicle to drive;
FIG. 4 is a password configuration schematic diagram;
FIG. 5 is a flow chart of another method for controlling a vehicle to drive; and
FIG. 6 is a structural schematic diagram of a device for controlling a vehicle to drive.

### DETAILED DESCRIPTION

The following will clearly and completely describe the technical solutions of the present invention in combination with the drawings.

In order to improve the market competitiveness of automobiles, most vehicles are equipped with a keyless start function (also referred as one-button start function), usually a keyless start button is configured on the vehicle console. When the user clicks the keyless start button, a simple ignition can be achieved. Compared with the method of starting the vehicle with a physical key, the convenience of starting the vehicle is increased.

However, at present, when performing a keyless start, in order to achieve the anti-theft function, usually after the user clicks the keyless start button, the main control unit of the vehicle detects the physical key of the vehicle. If the physical key can be detected, the car is controlled to start to prevent theft.

However, in some practical inventions, there will be scenarios where the user forgets to bring or cannot find or does not want to use the physical key (hereinafter referred to as "no physical key") but needs to start the vehicle. At this time, since the user has no physical key, the vehicle cannot be started, the reliability of vehicle start is low, and the user experience is reduced.

In order to solve this technical problem, the inventor found through research that after the user clicks the keyless start button, if the physical key detection link can be skipped, that is, the anti-theft verification link can be skipped, the vehicle can be started directly to ensure the reliability of vehicle start.

Furthermore, in order to ensure that there are no security issues caused by anti-theft verification, the identity verification of the driver can be performed after the vehicle is started but before it is driven. Only after the verification is passed, the driver is allowed to control the vehicle to drive. Specifically, the present invention provides a method and a device for controlling a vehicle to drive, and an electronic device. When it is determined that the preset keyless start conditions are met, the keyless start mode is entered. If a keyless start instruction is received, the anti-theft verification operation is skipped and the vehicle is directly controlled to start, which ensures that the driver can start the vehicle without a physical key. The vehicle start reliability is high and the user experience is improved. Further, after the vehicle is started, identity verification of the driver in the vehicle is performed. If the verification is passed, a vehicle drive permission instruction is sent to the vehicle drive control unit on the vehicle, so that the vehicle drive control unit responds to the driver instruction of the driver and controls the vehicle to drive according to the driver instruction. That is, the vehicle is allowed to drive only after it is determined that the driver is legal, realizing the anti-theft function is realized and the safety of vehicle driving is ensured.

Based on the above content, the present invention provides a method for controlling a vehicle to drive, which is applied to a controller on a vehicle. The controller can be a KBCM (body electronic domain controller), a PEPS (Passive-Entry-Passive-Start), an ECM (engine control module), a domain controller, etc.

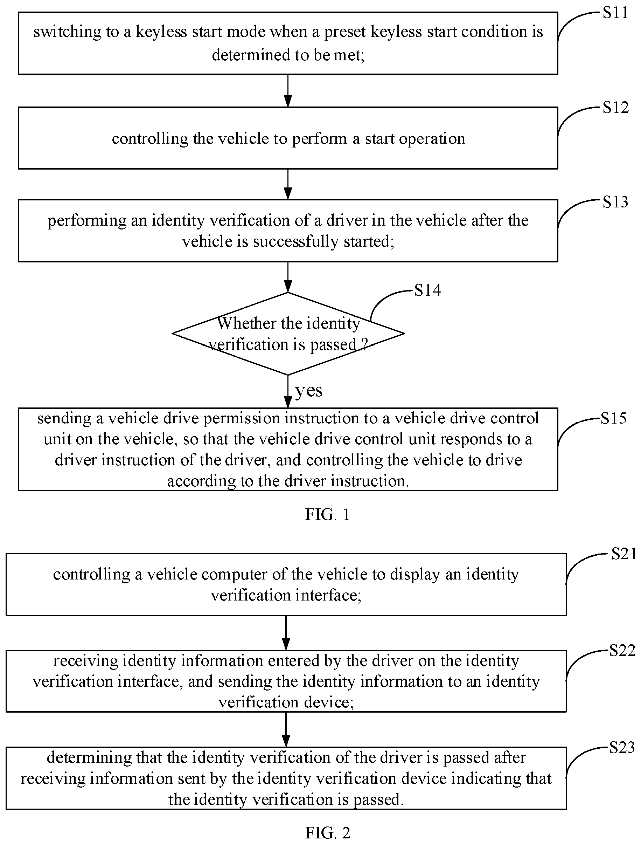

As shown in FIG.1 , the method for controlling the vehicle to drive can include:
In a step S11, when it is determined that the preset keyless start condition is met, switching to the keyless start mode.

The application scenario is that the user does not have a physical key when driving the vehicle. Generally, when the solution of the present invention is used to control the vehicle to drive, it is necessary to determine whether the preset keyless start condition is met.

Specifically, the step of determining whether the preset keyless start condition is met is:
determining whether the door of the vehicle is unlocked, and if unlocked, determining that the preset keyless start condition is met.

That is, the door of the vehicle is unlocked and the driver enters the vehicle, so that the subsequent driver can drive the vehicle.

After determining that the preset keyless start condition is met, the controller switches to the keyless start mode.

The keyless start mode described here is different from the local mode and remote mode of the vehicle. In this mode, the controller periodically sends the keyless start mode start instructions to the CAN bus of the vehicle until the vehicle stops sending when the engine is turned off, and when the vehicle is started through the keyless start mode, the physical key is no longer detected, and other controllers on the vehicle, such as the engine controller, are in a corresponding working state. In addition, the start the keyless start mode instruction is periodically sent to the CAN bus of the vehicle, and the vehicle status can be recorded in time.

In a step S13, the vehicle is controlled to start according to the received keyless start instruction.

After the driver enters the vehicle, the vehicle can be started by clicking the keyless start button. If the user clicks the button, the controller can receive the keyless start instruction generated when the button is triggered. At this time, the vehicle can be controlled to start.

The control of vehicle start refers to operations such as high voltage power-on of equipment such as the engine, but does not include anti-theft verification operations (specifically, operations such as detecting the physical key of the vehicle). That is, in the present invention, the anti-theft verification operation when clicking the keyless start button in the prior art is directly skipped, and the control of vehicle start operation is directly executed.

In a step S14, after the vehicle is successfully started, the identity verification of the driver in the vehicle is performed.

Since the above steps do not perform anti-theft verification, in order to prevent the driver from illegally driving the vehicle, an identity verification link of the driver is added.

Specifically, as shown in FIG. 2, the step S14 can include:
In a step S21, the vehicle computer (also referred as vehicle-mounted terminal or in-vehicle infotainment system or vehicle terminal, for example HUT) is controlled to display the identity verification interface.

The controller sends an instruction to the vehicle computer to display the identity verification interface. The identity verification interface can be implemented in a variety of ways, such as displaying a text box on the identity verification interface, the text box can be filled with name, phone number, ID number, vehicle identification ID number, etc. The driver can manually enter at least one of the above information, and then click to confirm the operation, and the controller can obtain the information entered by the user.

In addition, the identity verification interface can also display a voice input button. The user clicks the button to enter the required information, such as voice input of name, phone number, ID number, vehicle identification ID number, etc. During the inputting of voice of the user, the controller can collect the input voice of the user, and after the user stops clicking the button, the controller can obtain all collected voices of the user.

In a step S22, the identity information entered by the driver on the identity verification interface is received, and the identity information is sent to the identity verification device.

In the step S22, the information entered by the user in the text box or the voice of the user can be used as the identity information entered by the driver in the identity verification interface.

In actual applications, in order to reduce the storage space of the controller of the vehicle, the legitimate user information (i.e., the information used to verify the identity information entered by the user) is generally stored in the identity verification device, which can be a cloud platform, etc. At this time, the controller needs to send the identity information to the identity verification device so that the identity verification device verifies the user information. If the verification is successful, the information indicating that the identity verification is successful will be sent to the controller.

In a step S23, after the information indicating that the identity verification is successful sent by the identity verification device is received, it is determined that the identity verification of the driver is successful.

Specifically, if the controller receives the information indicating that the identity verification is successful sent by the identity verification device, it is determined that the identity verification of the driver is successful.

In the above, the identity verification of the driver in the vehicle is performed before the vehicle is started but not driven. In addition, the identity verification of the driver can also be performed at other stages. For example, when the driver opens the door, the fingerprint of the finger pulling the main driver's door handle is collected and verified. Alternative, when the user clicks the keyless start button, the vehicle computer displays the identity verification interface to verify the driver. The specific stages used for verification can be set based on the actual scenario.

In step S14, it is determine that the identity verification is passed; if so, execute the step S15.

Specifically, if the controller receives information sent by the identity verification device indicating that the identity verification is passed, it determines that the identity verification of the driver is passed. If the controller receives information sent by the identity verification device indicating that the identity verification is not passed, it determines that the identity verification of the driver is not passed, and displays the identity verification failure information on the vehicle computer. At this time, the driver can verify again.

When it is determined that the identity verification of the driver is not passed, the controller will not send a vehicle drive permission instruction to the vehicle drive control unit on the vehicle, that is, even if the driver issues actions such as stepping on the accelerator, braking, turning the steering wheel, etc., and the vehicle will not respond to these actions.

In step S15, a vehicle drive permission instruction is sent to the vehicle drive control unit on the vehicle, so that the vehicle drive control unit responds to the driver instruction of the driver and controls the vehicle to drive according to the driver instruction.

Specifically, if the controller determines that the identity verification of the driver is passed, the controller sends a vehicle drive permission instruction to the vehicle drive control unit on the vehicle. In which, the vehicle drive control unit can be an engine controller, etc.

Thereafter, the vehicle drive control unit can respond to the driver instruction of the driver, such as stepping on the accelerator, braking, turning the steering wheel, etc., and then control the vehicle to drive according to the driver instruction.

When it is determined that the preset keyless start conditions are met, the keyless start mode is entered, and the anti-theft verification operation is skipped to directly control the vehicle to start if a keyless start instruction is received, thereby ensuring that the driver can start the vehicle without a physical key, and the vehicle start reliability is high, which improves the user experience. Further, after the vehicle is started, the identity verification of the driver in the vehicle is authenticated. If the verification is passed, an instruction to allow the vehicle to drive is sent to the vehicle drive control unit on the vehicle, so that the vehicle drive control unit responds to the driver instruction of the driver and controls the vehicle to drive according to the driver instruction of the driver. That is, the vehicle is allowed to drive only after it is determined that the driver is legal, the anti-theft function is realized and the safety of vehicle driving is ensured.

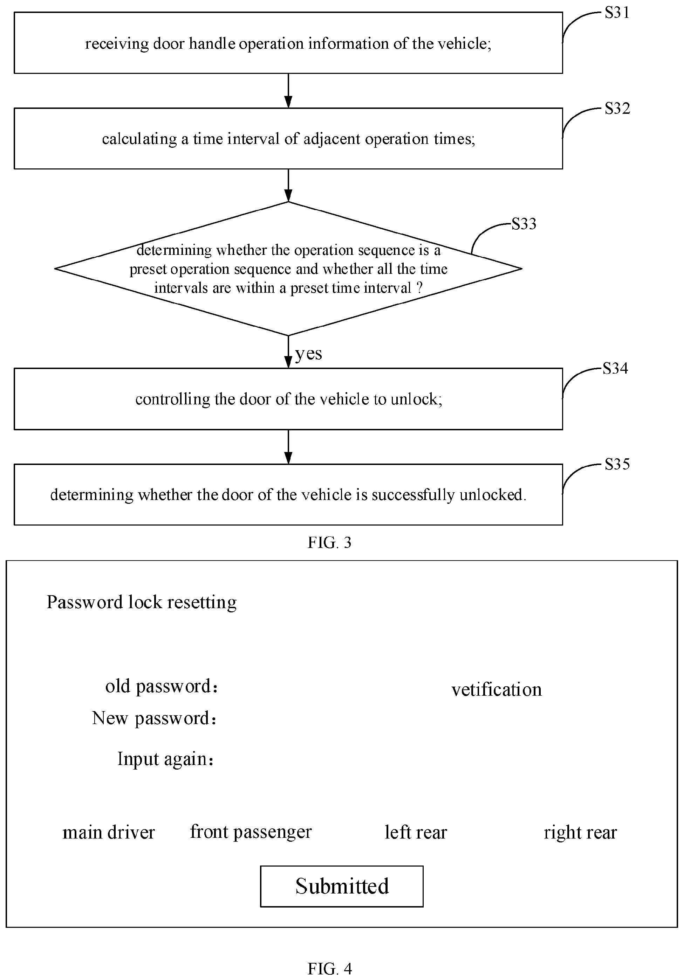

In the above the step of "determining whether the door of the vehicle is unlocked" is mentioned. In another implementation of the present invention, a specific implementation of "determining whether the door of the vehicle is unlocked" is given. As sown in FIG. 3, the step can include:
In a step S31, receiving the door handle operation information of the vehicle is received, the door handle operation information includes the operation sequence and the operation time.

Specifically, in order to avoid the problem that the existing Bluetooth key unlocking, remote control unlocking, smart key unlocking and other methods are greatly affected by the signal and cannot be unlocked normally when the signal is poor. The present invention adjusts the unlocking method and uses the method of pulling the door handle to unlock.

When using the method of pulling the door handle to unlock, the vehicle controller is in sleep mode, the controller needs to be awakened first, and then the door handle operation information is collected and verified by the controller, and the door is unlocked after the verification is passed.

It should be noted that although the controller is in the sleep mode, it can receive the operation information of the door handle and determine whether to perform the awakening operation based on the operation information of the door handle.

Specifically, the step of "receiving the door handle operation information of the vehicle" includes:
1) acquiring a first duration.

The first duration is the time for receiving the operation signal of the preset handle.

When the entire vehicle is locked and the user does not carry the smart key and the Bluetooth key (to avoid induction recognition triggering), the controller can be awakened by pulling the door handle briefly. Generally speaking, a preset handle is selected from the main driver's door handle, the front passenger's door handle, the left rear door handle and the right rear door handle. For the convenience of the operation of the driver, the main driver's door handle is generally selected as the preset handle. It should be noted that the door handle is a non-hidden door handle.

Then the time when the driver pulls the preset handle is collected. Specifically, when the driver pulls the preset handle, the controller can receive the operation signal of the preset handle. Therefore, the time when the operation signal of the preset handle is received is used as the time when the driver pulls the preset handle, which is called the first duration.
2) determining whether the first duration is less than the first preset duration threshold.

When the preset handle is pulled in a short time, the controller is awakened. Therefore, the first preset duration threshold is arranged, which is generally 5 seconds.

Then determining whether the first duration is less than the first preset duration threshold.
3) if so, performing the awakening operation.

If the first duration is less than the first preset duration threshold, the controller performs the awakening operation at this time. After the controller is awakened, the controller can perform the awakening operation of the entire vehicle. In addition, it can also be to control the door unlocking before performing the awakening operation of the entire vehicle.
4) after the awakening operation is successfully performed, receiving the door handle operation information generated when the door handle of the vehicle is operated.

After the driver waits for a certain period of time, such as 5 seconds, the driver can pull the corresponding door handles in sequence according to the preset operation sequence. Such as, the preset operation sequence is the main driver's door handle-front passenger driver's door handle-main driver's door handle, the main driver's door handle, the front passenger driver's door handle and the main driver's door handle can be pulled in sequence.

The main driver's door handle can be represented by the a1, the front passenger driver's door handle can be represented by the a2, the left and right door handles can be represented by the a3, and the right rear door handle can be represented by the a4.

In order to avoid maloperation, it can be set that the operation time of two adjacent door handles must be within a preset time interval, such as 5-20 seconds.

Therefore, in actual application, if the user does not have a physical key and needs to unlock by pulling the door handle, the door handle operation information is obtained when the user pulls the door handle. In which, the door handle operation information includes the operation sequence and the operation time.

The operation sequence refers to the order in which the user pulls the door handle, such as the main driver's door handle, the front passenger driver's door handle and the main driver's door handle.

The operation time refers to the time when the user pulls the door handle, such as the time when the main driver's door handle is pulled is: 10:30, the time when the front passenger door handle is pulled is: 10:32, etc.

Subsequently, by verifying whether the operation sequence is the preset operation sequence and whether all the time intervals are within the preset time interval, it is determined whether the door is legally unlocked.

In a step S32, the time interval between adjacent operation times is calculated.

Since it is preset that the operation time of two adjacent door handles must be within the preset time interval, it is necessary to calculate the time interval between adjacent operation times. Specifically, the difference between the latter operation time and the previous operation time in the two adjacent operation times is used as the time interval between adjacent operation times.

In a step S33, it is determined whether the operation sequence is the preset operation sequence and whether all the time intervals are within the preset time interval; if so, execute a step S34.

Specifically, verifying whether the operation sequence is the preset operation sequence, and verifying whether all the time intervals are within the preset time interval.

In the step S34, the door of the vehicle is controlled to unlock.

If it is verified that the operation sequence is the preset operation sequence and all the time intervals are within the preset time intervals, it means that the door is unlocked legally. At this time, the controller controls the door of the vehicle to unlock, and the user only needs to wait for the controller to unlock, usually for 5 seconds.

If it is verified that the operation sequence is not the preset operation sequence and all the time intervals are not within the preset time interval, it is determined that it is not a legal door unlocking. At this time, the controller does not control the door to unlock. After the vehicle is stationary for a period of time (such as the vehicle enters the sleep time, such as 5 minutes), the user pulls the preset handle again to awaken the controller and unlock the door.

In a step S35, it is determined whether the door of the vehicle is successfully unlocked.

In actual scenarios, it may happen that although the controller performs the operation of controlling the door to unlock of the vehicle, the door is not successfully unlocked due to reasons such as door response failure or door unlocking device failure. Therefore, the controller verifies whether the door of the vehicle is successfully unlocked.

In the above, the preset operation sequence is used when verifying the operation sequence. The generation process of the preset operation sequence is introduced as follows:
Specifically, there are two implementation methods for the generation process of the preset operation sequence, which are as follows:
1. In a first implementation method:
   The generation process of the preset operation sequence includes:
   1) acquiring a second duration.
      The second duration is the time of receiving the operation signal of the preset handle.
   2) determining whether the second duration is greater than the second preset duration threshold.
   3) if so, performing the awakening operation and switching to a password reset mode.

Specifically, when generating the preset operation sequence, it is also necessary to pull the preset handle to awaken the controller. In order to distinguish it from the pulling of the preset handle during the use of the vehicle, the pulling of the preset handle during the use of the vehicle adopts a pulling method in a short time, and the pulling handle when generating the preset operation sequence is a pulling method in a long time, which generally requires pulling the door handle in a long time for 10-15 seconds.

The second preset duration threshold can be 10 seconds. Generally, the second preset duration threshold is greater than the first preset duration threshold to distinguish between pulling the door handle in a short time and pulling the door handle in a long time, and then determine whether it is a vehicle use process or a preset operation sequence generation process.

In the process of generating the preset operation sequence, after the controller performs the awakening operation, it will switch its own mode to the password reset mode.
4) receiving the handle operation sequence information.
5) taking the handle operation sequence information as the preset operation sequence and storing the handle operation sequence information.

After the user releases the main driver's door handle, the user can pull the corresponding door handle based on the door handle operation sequence that the user wants to set. When pulling the door handle, it can be any combination of the main driver's door handle, the front passenger door handle, the left rear door handle and the right rear door handle. When pulling the door handle, it is also necessary to record the number of pulling the door handles. If the same door handle is pulled twice, it is considered to be pulled twice.

If the operation information generated by pulling the door handle is no longer received, waiting for a period of time, such as 30 seconds, and then the handle operation sequence information is recorded as the preset operation sequence and store the handle operation sequence information in the storage space of the controller.
2. In a second implementation method:
The generation process of the preset operation sequence includes:
1) controlling the vehicle computer of the vehicle to display the operation information input interface.

Regarding the operation information input interface refer to FIG. 4.

The user needs to enter the old password first, so as to verify the old password, and after the verification is passed, a new password is entered, and the new password is entered again, and then a submit operation is clicked.

It should be noted that the old password and the new password in the present are both door handle operation sequences, the old password entered is the original preset operation sequence, and the new password entered is the preset operation sequence. The original preset operation sequence and the preset operation sequence are both realized by clicking the "main driver", "front passenger", "left rear" and "right rear" buttons on the operation information input interface.

The application scenario of the present invention is the scenario of updating the preset operation sequence. In addition, if the preset operation sequence is set for the first time, there is no need to enter the old password, and the new password can be directly entered.
2) obtaining the original preset operation sequence entered in the operation information input interface, and verifying the original preset operation sequence.
3) if the verification is successful, obtaining the preset operation sequence entered in the operation information input interface and storing the preset operation sequence.

After the user enters the original preset operation sequence and clicks the verification button, the controller will receive a signal A, and then the controller verifies whether the original preset operation sequence is correct, and a signal B is feedback, which indicates correct or incorrect.

If the verification is successful, a new password can be set and the new password is prompted to be submitted (such as signal C). The controller receives the new password and then sends a feedback signal D. The signal D indicates whether the password reset is successful. The operation information input interface gives corresponding prompts.

If the reset is successful, the controller will save the new password and obtain the preset operation sequence.

It should be noted that the controller communication adopts CAN signal communication, which is not affected by the strength of external signals, and improves the reliability of the operation of the vehicle.

The awakening of the controller, the setting of the password, and unlocking can be performed by pulling the door handle. When the user carries a physical key, the corresponding operation can also be performed to improve user convenience.

The above , FIG. 1 discloses a solution for using the vehicle, and when determining whether the door of the vehicle is unlocked, the unlocking solution is disclosed. This solution also configures a specific implementation solution for leaving the vehicle.

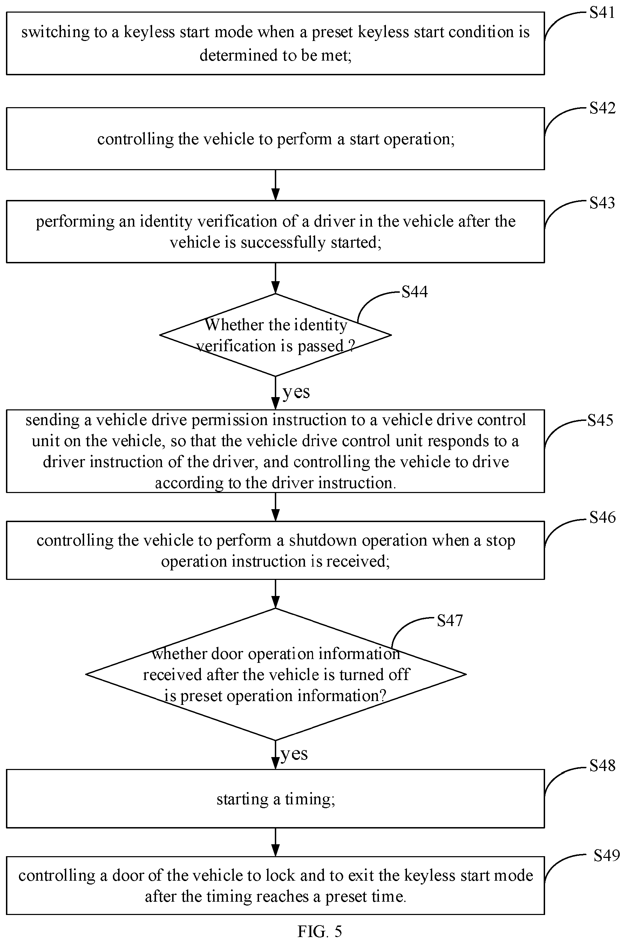

Specifically, as shown in FIG. 5, after the vehicle drive permission instruction is sent to the vehicle drive control unit on the vehicle, the method further includes:
In a step S46, in the case that a stop operation instruction is received, the vehicle is controlled to perform a shutdown operation.

If the user clicks the keyless start button during the operation of the vehicle, the controller will receive the stop operation instruction, and the controller controls the vehicle to perform the shutdown operation.

In a step S47, it is determined whether the door operation information received after the vehicle is turned off is a preset operation information; if so, execute a step S48.

If it is detected that the occupant has gotten off the vehicle, it is considered that the door operation information received after the vehicle is turned off is the preset operation information, and the preset operation information can be the main driver's door opening and then the main driver's door closing. That is, if the driver opens and closes the main driver's door, it is considered that the occupant has gotten off the vehicle.

In a step S48, a timer is started.

Specifically, in order to prevent the occupant from returning to the vehicle, the door can be locked after waiting for a period of time.

The time period can be 3 minutes.

In a step S49, after the timer reaches the preset time, the door of the vehicle is controlled to be locked, and the keyless start mode is exited.

The preset time can be the above-mentioned 3 minutes, at which time the controller controls the door to be locked, the keyless start mode is exited, and controls the vehicle is controlled to be in the sleep mode to wait for the next awakening.

The entire operation process of the vehicle is introduced through the three dimensions of unlocking, using the vehicle, and leaving the vehicle, and then in actual application, the vehicle driving control can be performed according to this solution.

It should be noted that the other steps in FIG. 5 can refer to the corresponding description above .

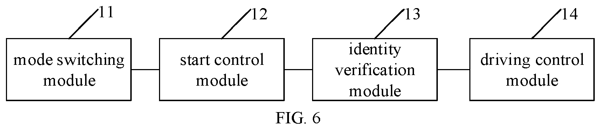

Optionally, based on the above-mentioned method for controlling a vehicle to drive, the present invention provides a device for controlling a vehicle to drive, which, with reference to FIG. 6, can include:
a mode switching module 11, configured to switch to a keyless start mode when a preset keyless start condition is determined to be met;
a start control module 12, configured to control the vehicle to perform a start operation according to a received keyless start instruction;
an identity verification module 13, configured to an identity verification of a driver in the vehicle after the vehicle is successfully started;
a driving control module 14, configured to send, if the identity verification is passed, a vehicle drive permission instruction to a vehicle drive control unit on the vehicle, so that the vehicle drive control unit responds to a driver instruction of the driver, and controlling the vehicle to drive according to the driver instruction.

Furthermore, the identity verification module 13 is specifically configured to:
control a vehicle computer of the vehicle to display an identity verification interface; receive identity information entered by the driver on the identity verification interface, and sending the identity information to an identity verification device; and determine that the identity verification of the driver is passed after receiving information sent by the identity verification device indicating that the identity verification is passed.

Further, the mode switching module 11 can include:
an unlock determination sub-module, configured to determine whether the door of the vehicle is unlocked;
a condition determination sub-module, configured to determine whether the preset keyless start condition is met if the door of the vehicle is unlocked.

Further, the unlock determination sub-module can include:
an information receiving unit, configured to receive the door handle operation information of the vehicle, the door handle operation information includes the operation sequence and the operation time;
an interval calculation unit, configured to calculate a time interval of adjacent operation times;
a determination unit, configured to determine whether the operation sequence is a preset operation sequence and whether all the time intervals are within a preset time interval;
an unlock control unit, configured to control the door of the vehicle to unlock, if the operation sequence is the preset operation sequence and all the time intervals are within the preset time interval; and
an unlock determination unit, configured to determine whether the door of the vehicle is successfully unlocked.

Furthermore, the information receiving unit includes:
a time acquisition sub-unit, configured to acquire a first duration, and the first duration is a time when an operation signal of a preset handle is received;
a determination sub-unit, configured to determine whether the first duration is less than a first preset duration threshold;
an awakening sub-unit, configured to perform an awakening operation if the first duration is less than a first preset duration threshold;
an information receiving sub-unit, configured to receive the door handle operation information generated when the door handle of the vehicle is operated after the awakening operation is successfully performed.

Further, the device also includes an operation sequence generation module, which includes:
a time acquisition sub-module, configured to acquire the second duration, the second duration is a time when an operation signal of a preset handle is received;
a threshold determination sub-module, configured to determine whether the second duration is greater than the second preset duration threshold;
a password reset sub-module, configured to perform the awakening operation and switch to the password reset mode if the second duration is greater than the second preset duration threshold;
an information receiving sub-module, configured to receive the handle operation sequence information;
an information determination sub-module, configured to use the handle operation sequence information as the preset operation sequence and store the handle operation sequence information.

Further, the operation sequence generation module includes:
an interface control sub-module, configured to control the vehicle computer to display the operation information input interface;
a verification sub-module, configured to acquire an original preset operation sequence input on the operation information input interface, and verify the original preset operation sequence;
a sequence acquisition sub-module, configured to acquire the preset operation sequence input on the operation information input interface if the verification is passed, and store the preset operation sequence.

Further, the device also includes:
a shutdown operation module, configured to control the vehicle to perform a shutdown operation when a stop operation instruction is received;
an information determination module, configured to determine whether the door operation information received after the vehicle is turned off is a preset operation information;
a timing module, configured to start timing if the door operation information received after the vehicle is turned off is a preset operation information;
a mode control module, configured to control a door of the vehicle to lock and exit the keyless start mode after the timing reaches a preset time.

When it is determined that the preset keyless start conditions are met, the keyless start mode is entered. If a keyless start instruction is received, the anti-theft verification operation is skipped and the vehicle start is directly controlled, which ensures that the driver can start the vehicle without a physical key, and the vehicle start reliability is high, which improves the user experience. Further, after the vehicle is started, the driver in the vehicle is verified. If the verification is passed, a vehicle drive permission instruction is sent to the vehicle drive control unit on the vehicle, so that the vehicle drive control unit responds to the driver instruction of the driver and controls the vehicle to drive according to the driver instruction. That is, the vehicle is allowed to drive only after it is determined that the driver is legal, the anti-theft function is realized and the safety of vehicle driving is ensured.

It should be noted that the working process of each module, sub-module, unit and sub-unit can refer to the corresponding description above, which will not be repeated here.

Optionally, based on the above method and the device for controlling the vehicle to drive, the present invention provides an electronic device, which includes: a memory and a processor;

The memory is used to store programs;

The processor is configured cause the above said device for controlling a vehicle to drive to execute the above method for controlling a vehicle to drive.

Specifically, the method for controlling the vehicle to drive includes steps as following:
switching to a keyless start mode when a preset keyless start condition is determined to be met;
controlling the vehicle to perform a start operation according to a received keyless start instruction;
performing an identity verification of a driver in the vehicle after the vehicle is successfully started; and
sending, if the identity verification is passed, a vehicle drive permission instruction to a vehicle drive control unit on the vehicle, so that the vehicle drive control unit responds to a driver instruction of the driver, and controlling the vehicle to drive according to the driver instruction.

Further, the step of performing the identity verification of the driver in the vehicle includes:
controlling a vehicle computer of the vehicle to display an identity verification interface;
receiving identity information entered by the driver on the identity verification interface, and sending the identity information to an identity verification device; and
determining that the identity verification of the driver is passed after receiving information sent by the identity verification device indicating that the identity verification is passed.

Further, the step of determining whether the preset keyless start condition is met includes:
determining whether a door of the vehicle is unlocked; and
if the door of the vehicle is unlocked, determining that the preset keyless start condition is met.

Further, the step of determining whether the door of the vehicle is unlocked includes:
receiving door handle operation information of the vehicle, and the door handle operation information comprises an operation sequence and an operation time;
calculating a time interval of adjacent operation times;
determining whether the operation sequence is a preset operation sequence and whether all the time intervals are within a preset time interval;
controlling the door of the vehicle to unlock, if the operation sequence is the preset operation sequence and all the time intervals are within the preset time interval; and
determining whether the door of the vehicle is successfully unlocked.

Further, the step of receiving the door handle operation information of the vehicle includes:
acquiring a first duration, in which the first duration is a time when an operation signal of a preset handle is received;
determining whether the first duration is less than a first preset duration threshold;
if so, performing an awakening operation; and
receiving the door handle operation information generated when the door handle of the vehicle is operated after successfully performing the awakening operation.

Further, the generation process of the preset operation sequence includes:
acquiring a second duration, wherein the second duration is a time when an operation signal of a preset handle is received;
determining whether the second duration is greater than a second preset duration threshold;
if so, performing an awakening operation and switching to a password reset mode;
receiving handle operation sequence information;
taking the handle operation sequence information as the preset operation sequence and storing the handle operation sequence information.

Further, the generation process of the preset operation sequence includes:
controlling the vehicle computer to display the operation information input interface;
acquiring an original preset operation sequence input on the operation information input interface, and verifying the original preset operation sequence; and
if the verification is successful, acquiring the preset operation sequence input on the operation information input interface, and storing the preset operation sequence.

Further, after sending the vehicle drive permission instruction to the vehicle drive control unit on the vehicle, it also includes:
controlling the vehicle to perform a shutdown operation when a stop operation instruction is received;
determining whether door operation information received after the vehicle is turned off is preset operation information;
if so, starting a timing;
controlling a door of the vehicle to lock and to exit the keyless start mode after the timing reaches a preset time.

When it is determined that the preset keyless start conditions are met, the keyless start mode is entered. If a keyless start instruction is received, the anti-theft verification operation is skipped and the vehicle start is directly controlled, which ensures that the driver can start the vehicle without a physical key, and the vehicle start reliability is high, which improves the user experience. Further, after the vehicle is started, the driver in the vehicle is verified. If the verification is passed, a vehicle drive permission instruction is sent to the vehicle drive control unit on the vehicle, so that the vehicle drive control unit responds to the driver instruction of the driver and controls the vehicle to drive according to the driver instruction. That is, the vehicle is allowed to drive only after it is determined that the driver is legal, the anti-theft function is realized and the safety of vehicle driving is ensured.

## Claims

1. A method for controlling a vehicle to drive, comprising:
(S11; S41) switching to a keyless start mode when a preset keyless start condition is determined to be met;
(S12; S42) controlling the vehicle to perform a start operation according to a received keyless start instruction;
(S13; S43) performing an identity verification of a driver in the vehicle after the vehicle is successfully started; and
(S15; S45) sending, if the identity verification is passed, a vehicle drive permission instruction to a vehicle drive control unit on the vehicle, so that the vehicle drive control unit responds to a driver instruction of the driver, and controlling the vehicle to drive according to the driver instruction;
**characterized in that**
the preset keyless start condition comprises that a door of the vehicle is unlocked; and
if the door of the vehicle is unlocked, determining that the preset keyless start condition is met.

2. The method for controlling the vehicle to drive according to claim 1, wherein the step of (S13) performing the identity verification of the driver in the vehicle comprises:
(S21) controlling a vehicle computer of the vehicle to display an identity verification interface;
(S22) receiving identity information entered by the driver on the identity verification interface, and sending the identity information to an identity verification device; and
(S23) determining that the identity verification of the driver is passed after receiving information sent by the identity verification device indicating that the identity verification is passed.

3. The method for controlling the vehicle to drive according to claim 2, wherein, a text box is displayed on the identity verification interface, and the text box is configured to fill in at least one information of a name, a telephone number, an identity number, and a vehicle identification ID number.

4. The method for controlling the vehicle to drive according to claim 2, wherein, the step of receiving the identity information entered by the driver on the identity verification interface comprises:
receiving at least one information of a name, a telephone number, an identity number, and a vehicle identification ID number entered by a voice of the driver.

5. The method for controlling the vehicle to drive according to claim 1, wherein determining whether the door of the vehicle is unlocked comprises:
(S31) receiving door handle operation information of the vehicle, wherein the door handle operation information comprises an operation sequence and an operation time;
(S32) calculating a time interval of adjacent operation times;
(S33) determining whether the operation sequence is a preset operation sequence and whether all the time intervals are within a preset time interval;
(S34) controlling the door of the vehicle to unlock, if the operation sequence is the preset operation sequence and all the time intervals are within the preset time interval; and
(S35) determining whether the door of the vehicle is successfully unlocked.

6. The method for controlling the vehicle to drive according to claim 5, wherein, the step of (S31) receiving the door handle operation information of the vehicle comprises:
acquiring a first duration, wherein the first duration is a time when an operation signal of a preset handle is received;
determining whether the first duration is less than a first preset duration threshold;
if so, performing an awakening operation; and
receiving the door handle operation information generated when the door handle of the vehicle is operated after successfully performing the awakening operation.

7. The method for controlling the vehicle to drive according to claim 5, wherein, a generation process of the preset operation sequence comprises:
acquiring a second duration, wherein the second duration is a time when an operation signal of a preset handle is received;
determining whether the second duration is greater than a second preset duration threshold;
if so, performing an awakening operation and switching to a password reset mode;
receiving handle operation sequence information;
taking the handle operation sequence information as the preset operation sequence and storing the handle operation sequence information.

8. The method for controlling the vehicle to drive according to claim 7, wherein, the preset operation sequence is to operate a main driver door handle, to operate a front passenger door handle, and to operate the main driver door handle.

9. The method for controlling the vehicle to drive according to claim 5, wherein, a generation process of the preset operation sequence comprises:
controlling the vehicle computer to display the operation information input interface;
acquiring an original preset operation sequence input on the operation information input interface, and verifying the original preset operation sequence; and
if the verification is successful, acquiring the preset operation sequence input on the operation information input interface, and storing the preset operation sequence.

10. The method for controlling the vehicle to drive according to claim 1, wherein, after (S45) sending the vehicle drive permission instruction to the vehicle drive control unit on the vehicle, further comprising:
(S46) controlling the vehicle to perform a shutdown operation when a stop operation instruction is received;
(S47) determining whether door operation information received after the vehicle is turned off is preset operation information;
(S48) if so, starting a timing;
(S49) controlling a door of the vehicle to lock and to exit the keyless start mode after the timing reaches a preset time.

11. The method for controlling the vehicle to drive according to claim 1, wherein, the method is applied to a controller in the vehicle, and the controller is a body electronic domain controller, an intelligent entry and start system, an engine control module, or a domain controller.

12. A device for controlling a vehicle to drive, comprising:
a mode switching module (11), configured to switch to a keyless start mode when a preset keyless start condition is determined to be met;
a start control module (12), configured to control the vehicle to perform a start operation according to a received keyless start instruction;
an identity verification module (13), configured to an identity verification of a driver in the vehicle after the vehicle is successfully started;
a driving control module (14), configured to send, if the identity verification is passed, a vehicle drive permission instruction to a vehicle drive control unit on the vehicle, so that the vehicle drive control unit responds to a driver instruction of the driver, and controlling the vehicle to drive according to the driver instruction;
**characterized in that**
the mode switching module (11) includes:
an unlock determination sub-module, configured to determine whether the door of the vehicle is unlocked;
a condition determination sub-module, configured to determine whether the preset keyless start condition is met if the door of the vehicle is unlocked.

13. The device for controlling a vehicle to drive according to claim 12, wherein
the unlock determination sub-module includes:
an information receiving unit, configured to receive door handle operation information of the vehicle, the door handle operation information including an operation sequence and an operation time of the door handle;
an interval calculation unit, configured to calculate a time interval of adjacent operation times;
a determination unit, configured to determine whether the operation sequence is a preset operation sequence and whether all the time intervals are within a preset time interval;
an unlock control unit, configured to control the door of the vehicle to unlock, if the operation sequence is the preset operation sequence and all the time intervals are within the preset time interval; and
an unlock determination unit, configured to determine whether the door of the vehicle is successfully unlocked.

14. An electronic device, comprising: a memory and a processor;
wherein, the memory is used to store programs; and
the processor is configured to cause the device of claim 12 to execute the method for controlling a vehicle to drive according to any one of claims 1-11.

15. A vehicle comprising the electronic device according to claim 14, wherein the electronic device is a controller in the vehicle, and the controller is a body electronic domain controller, an intelligent entry and start system, an engine control module, or a domain controller.

## Patentansprüche

1. Verfahren zum Steuern eines Fahrzeugs zum Fahren, mit:
(S11; S41) Umschalten in einen schlüssellosen Startmodus, wenn bestimmt wird, dass eine voreingestellte schlüssellose Startbedingung erfüllt ist;
(S12; S42) Steuern des Fahrzeugs, einen Startvorgang gemäß einer empfangenen schlüssellosen Startanweisung durchzuführen;
(S13; S43) Durchführen einer Identitätsverifizierung eines Fahrers in dem Fahrzeug, nachdem das Fahrzeug erfolgreich gestartet ist; und
(S15; S45) wenn die Identitätsverifizierung bestanden ist, Senden einer Fahrfreigabeanweisung an eine Fahrzeugfahrsteuereinheit an dem Fahrzeug, sodass die Fahrzeugfahrsteuereinheit auf eine Fahreranweisung des Fahrers reagiert, und Steuern des Fahrzeugs zum Fahren gemäß der Fahreranweisung;
**dadurch gekennzeichnet, dass**
die voreingestellte schlüssellose Startbedingung aufweist, dass eine Tür des Fahrzeugs entriegelt ist; und
wenn die Tür des Fahrzeugs entriegelt ist, bestimmt wird, dass die voreingestellte schlüssellose Startbedingung erfüllt ist.

2. Verfahren zum Steuern eines Fahrzeugs zum Fahren nach Anspruch 1, wobei der Schritt des (S13) Durchführens der Identitätsverifizierung des Fahrers in dem Fahrzeug aufweist:
(S21) Steuern eines Fahrzeugcomputers des Fahrzeugs, eine Identitätsverifizierungsschnittstelle anzuzeigen;
(S22) Empfangen von durch den Fahrer auf der Identitätsverifizierungsschnittstelle eingegebener Identitätsinformation und Senden der Identitätsinformation an eine Identitätsverifizierungsvorrichtung; und
(S23) Bestimmen, dass die Identitätsverifizierung des Fahrers bestanden ist, nachdem von der Identitätsverifizierungsvorrichtung gesendete Information empfangen wird, die angibt, dass die Identitätsverifizierung bestanden ist.

3. Verfahren zum Steuern eines Fahrzeugs zum Fahren nach Anspruch 2, wobei ein Textfeld auf der Identitätsverifizierungsschnittstelle angezeigt wird und das Textfeld dazu konfiguriert ist, mindestens eine Information aus einem Namen, einer Telefonnummer, einer Identitätsnummer und einer Fahrzeugidentifikations-ID-Nummer einzutragen.

4. Verfahren zum Steuern eines Fahrzeugs zum Fahren nach Anspruch 2, wobei der Schritt des Empfangens der durch den Fahrer auf der Identitätsverifizierungsschnittstelle eingegebenen Identitätsinformation aufweist:
Empfangen mindestens einer Information aus einem Namen, einer Telefonnummer, einer Identitätsnummer und einer Fahrzeugidentifikations-ID-Nummer, die durch eine Stimme des Fahrers eingegeben wird.

5. Verfahren zum Steuern eines Fahrzeugs zum Fahren nach Anspruch 1, wobei das Bestimmen, ob die Tür des Fahrzeugs entriegelt ist, aufweist:
(S31) Empfangen von Türgriffbetätigungsinformation des Fahrzeugs, wobei die Türgriffbetätigungsinformation eine Betätigungssequenz und eine Betätigungszeit aufweist;
(S32) Berechnen eines Zeitintervalls benachbarter Betätigungszeiten;
(S33) Bestimmen, ob die Betätigungssequenz eine voreingestellte Betätigungssequenz ist und ob alle Zeitintervalle innerhalb eines voreingestellten Zeitintervalls liegen;
(S34) Steuern der Tür des Fahrzeugs zum Entriegeln, wenn die Betätigungssequenz die voreingestellte Betätigungssequenz ist und alle Zeitintervalle innerhalb des voreingestellten Zeitintervalls liegen; und
(S35) Bestimmen, ob die Tür des Fahrzeugs erfolgreich entriegelt ist.

6. Verfahren zum Steuern eines Fahrzeugs zum Fahren nach Anspruch 5, wobei der Schritt des (S31) Empfangens der Türgriffbetätigungsinformation des Fahrzeugs aufweist:
Erfassen einer ersten Zeitdauer, wobei die erste Zeitdauer eine Zeit ist, zu der ein Betätigungssignal eines voreingestellten Griffs empfangen wird;
Bestimmen, ob die erste Zeitdauer kleiner als ein erster voreingestellter Zeitdauerschwellenwert ist;
wenn ja, Durchführen eines Aufweckvorgangs; und
Empfangen der Türgriffbetätigungsinformation, die erzeugt wird, wenn der Türgriff des Fahrzeugs nach erfolgreichem Durchführen des Aufweckvorgangs betätigt wird.

7. Verfahren zum Steuern eines Fahrzeugs zum Fahren nach Anspruch 5, wobei ein Erzeugungsvorgang der voreingestellten Betätigungssequenz aufweist:
Erfassen einer zweiten Zeitdauer, wobei die zweite Zeitdauer eine Zeit ist, zu der ein Betätigungssignal eines voreingestellten Griffs empfangen wird;
Bestimmen, ob die zweite Zeitdauer größer als ein zweiter voreingestellter Zeitdauerschwellenwert ist;
wenn ja, Durchführen eines Aufweckvorgangs und Umschalten in einen Passwortzurücksetzungsmodus;
Empfangen von Griffbetätigungssequenzinformation;
Verwenden der Griffbetätigungssequenzinformation als die voreingestellte Betätigungssequenz und Speichern der Griffbetätigungssequenzinformation.

8. Verfahren zum Steuern eines Fahrzeugs zum Fahren nach Anspruch 7, wobei die voreingestellte Betätigungssequenz ist, einen Hauptfahrertürgriff zu betätigen, einen Beifahrertürgriff zu betätigen und den Hauptfahrertürgriff zu betätigen.

9. Verfahren zum Steuern eines Fahrzeugs zum Fahren nach Anspruch 5, wobei ein Erzeugungsvorgang der voreingestellten Betätigungssequenz aufweist:
Steuern des Fahrzeugcomputers, eine Betätigungsinformationseingabeschnittstelle anzuzeigen;
Erfassen einer auf der Betätigungsinformationseingabeschnittstelle eingegebenen ursprünglichen voreingestellten Betätigungssequenz und Verifizieren der ursprünglichen voreingestellten Betätigungssequenz; und
wenn die Verifizierung erfolgreich ist, Erfassen der auf der Betätigungsinformationseingabeschnittstelle eingegebenen voreingestellten Betätigungssequenz und Speichern der voreingestellten Betätigungssequenz.

10. Verfahren zum Steuern eines Fahrzeugs zum Fahren nach Anspruch 1, wobei nach dem (S45) Senden der Fahrfreigabeanweisung an die Fahrzeugfahrsteuereinheit an dem Fahrzeug ferner aufweisend:
(S46) Steuern des Fahrzeugs, einen Abschaltvorgang durchzuführen, wenn eine Stoppbetriebsanweisung empfangen wird;
(S47) Bestimmen, ob nach dem Abschalten des Fahrzeugs empfangene Türbetätigungsinformation eine voreingestellte Betätigungsinformation ist;
(S48) wenn ja, Starten einer Zeitmessung;
(S49) Steuern einer Tür des Fahrzeugs zum Verriegeln und zum Verlassen des schlüssellosen Startmodus, nachdem die Zeitmessung eine voreingestellte Zeit erreicht.

11. Verfahren zum Steuern eines Fahrzeugs zum Fahren nach Anspruch 1, wobei das Verfahren auf ein Steuergerät in dem Fahrzeug angewendet wird und das Steuergerät ein elektronisches Karosseriedomänensteuergerät, ein intelligentes Zugangs- und Startsystem, ein Motorsteuerungsmodul oder ein Domänensteuergerät ist.

12. Vorrichtung zum Steuern eines Fahrzeugs zum Fahren, aufweisend:
ein Modusumschaltmodul (11), das dazu konfiguriert ist, in einen schlüssellosen Startmodus umzuschalten, wenn bestimmt wird, dass eine voreingestellte schlüssellose Startbedingung erfüllt ist;
ein Startsteuerungsmodul (12), das dazu konfiguriert ist, das Fahrzeug zu steuern, einen Startvorgang gemäß einer empfangenen schlüssellosen Startanweisung durchzuführen;
ein Identitätsverifizierungsmodul (13), das dazu konfiguriert ist, eine Identitätsverifizierung eines Fahrers in dem Fahrzeug durchzuführen, nachdem das Fahrzeug erfolgreich gestartet ist;
ein Fahrsteuerungsmodul (14), das dazu konfiguriert ist, wenn die Identitätsverifizierung bestanden ist, eine Fahrfreigabeanweisung an eine Fahrzeugfahrsteuereinheit an dem Fahrzeug zu senden, sodass die Fahrzeugfahrsteuereinheit auf eine Fahreranweisung des Fahrers reagiert, und das Fahrzeug zu steuern, gemäß der Fahreranweisung zu fahren;
**dadurch gekennzeichnet, dass**
das Modusumschaltmodul (11) aufweist:
ein Entriegelungsbestimmungsuntermodul, das dazu konfiguriert ist, zu bestimmen, ob die Tür des Fahrzeugs entriegelt ist;
ein Bedingungsbestimmungsuntermodul, das dazu konfiguriert ist, zu bestimmen, ob die voreingestellte schlüssellose Startbedingung erfüllt ist, wenn die Tür des Fahrzeugs entriegelt ist.

13. Vorrichtung zum Steuern eines Fahrzeugs zum Fahren nach Anspruch 12, wobei
das Entriegelungsbestimmungsuntermodul aufweist:
eine Informationsempfangseinheit, die dazu konfiguriert ist, Türgriffbetätigungsinformation des Fahrzeugs zu empfangen, wobei die Türgriffbetätigungsinformation eine Betätigungssequenz und eine Betätigungszeit des Türgriffs aufweist;
eine Intervallberechnungseinheit, die dazu konfiguriert ist, ein Zeitintervall benachbarter Betätigungszeiten zu berechnen;
eine Bestimmungseinheit, die dazu konfiguriert ist, zu bestimmen, ob die Betätigungssequenz eine voreingestellte Betätigungssequenz ist und ob alle Zeitintervalle innerhalb eines voreingestellten Zeitintervalls liegen;
eine Entriegelungssteuereinheit, die dazu konfiguriert ist, die Tür des Fahrzeugs zu entriegeln, wenn die Betätigungssequenz die voreingestellte Betätigungssequenz ist und alle Zeitintervalle innerhalb des voreingestellten Zeitintervalls liegen; und
eine Entriegelungsbestimmungseinheit, die dazu konfiguriert ist, zu bestimmen, ob die Tür des Fahrzeugs erfolgreich entriegelt ist.

14. Elektronische Vorrichtung, aufweisend: einen Speicher und einen Prozessor;
wobei der Speicher zum Speichern von Programmen verwendet wird; und
der Prozessor dazu konfiguriert ist, die Vorrichtung nach Anspruch 12 zu veranlassen, das Verfahren zum Steuern eines Fahrzeugs zum Fahren nach einem der Ansprüche 1-11 auszuführen.

15. Fahrzeug, aufweisend die elektronische Vorrichtung nach Anspruch 14, wobei die elektronische Vorrichtung ein Steuergerät in dem Fahrzeug ist und das Steuergerät ein elektronisches Karosseriedomänensteuergerät, ein intelligentes Zugangs- und Startsystem, ein Motorsteuerungsmodul oder ein Domänensteuergerät ist.

## Revendications

1. Procédé pour commander un véhicule au niveau de sa conduite, comprenant :
(S11 ; S41) la commutation dans un mode de démarrage sans clé lorsqu'une condition de démarrage sans clé prédéfinie est déterminée comme devant être satisfaite ;
(S12 ; S42) la commande du véhicule afin qu'il réalise une opération de démarrage conformément à une instruction de démarrage sans clé reçue ;
(S13 ; S43) la réalisation d'une vérification d'identité d'un conducteur dans le véhicule après que le véhicule a été démarré avec succès ; et
(S15 ; S45) l'envoi, si la vérification d'identité est positive, d'une instruction d'autorisation de conduite de véhicule à une unité de commande de conduite de véhicule sur le véhicule de telle sorte que l'unité de commande de conduite de véhicule réponde à une instruction de conducteur du conducteur, et la commande du véhicule au niveau de sa conduite conformément à l'instruction de conducteur ;
**caractérisé en ce que** :
la condition de démarrage sans clé prédéfinie comprend le fait qu'une portière du véhicule est déverrouillée ; et
si la portière du véhicule est déverrouillée, la détermination du fait que la condition de démarrage sans clé prédéfinie est satisfaite.

2. Procédé pour commander le véhicule au niveau de sa conduite selon la revendication 1, dans lequel l'étape de réalisation (S13) de la vérification d'identité du conducteur dans le véhicule comprend :
(S21) la commande d'un ordinateur de véhicule du véhicule afin qu'il affiche une interface de vérification d'identité ;
(S22) la réception d'une information d'identité qui est entrée par le conducteur sur l'interface de vérification d'identité et l'envoi de l'information d'identité à un dispositif de vérification d'identité ; et
(S23) la détermination du fait que la vérification d'identité du conducteur est positive après la réception d'une information qui est envoyée par le dispositif de vérification d'identité et qui indique que la vérification d'identité est positive.

3. Procédé pour commander le véhicule au niveau de sa conduite selon la revendication 2, dans lequel une zone de texte est affichée sur l'interface de vérification d'identité et la zone de texte est configurée pour qu'il soit renseigné à l'intérieur au moins une information comprenant un nom, un numéro de téléphone, un numéro d'identité ou d'identification et un numéro ID d'identification de véhicule.

4. Procédé pour commander le véhicule au niveau de sa conduite selon la revendication 2, dans lequel l'étape de réception de l'information d'identité qui est entrée par le conducteur sur l'interface de vérification d'identité comprend :
la réception d'au moins une information comprenant un nom, un numéro de téléphone, un numéro d'identité ou d'identification et un numéro ID d'identification de véhicule qui est entrée au moyen de la voix du conducteur.

5. Procédé pour commander le véhicule au niveau de sa conduite selon la revendication 1, dans lequel la détermination de si la portière du véhicule est ou non déverrouillée comprend :
(S31) la réception d'une information d'opération(s) sur poignée de portière du véhicule, dans lequel l'information d'opération(s) sur poignée de portière comprend une séquence d'opérations et un temps d'opération(s) ;
(S32) le calcul d'un intervalle de temps de temps d'opération(s) adjacents ;
(S33) la détermination de si la séquence d'opérations est ou non une séquence d'opérations prédéfinie et de si tous les intervalles de temps sont ou non à l'intérieur d'un intervalle de temps prédéfini ;
(S34) la commande de la portière du véhicule afin de la déverrouiller si la séquence d'opérations est la séquence d'opérations prédéfinie et que tous les intervalles de temps sont à l'intérieur de l'intervalle de temps prédéfini ; et
(S35) la détermination de si la portière du véhicule est ou non déverrouillée avec succès.

6. Procédé pour commander le véhicule au niveau de sa conduite selon la revendication 5, dans lequel l'étape de réception (S31) de l'information d'opération(s) sur poignée de portière du véhicule comprend :
l'acquisition d'une première durée, dans lequel la première durée est un temps à l'issue duquel un signal d'opération(s) sur une poignée prédéfinie est reçu ;
la détermination de si la première durée est ou non plus courte qu'un premier seuil de durée prédéfini ;
s'il en est ainsi, la réalisation d'une opération de réveil ; et
la réception de l'information d'opération(s) sur poignée de portière qui est générée lorsque la poignée de portière du véhicule a subi une opération après la réalisation avec succès de l'opération de réveil.

7. Procédé pour commander le véhicule au niveau de sa conduite selon la revendication 5, dans lequel un processus de génération de la séquence d'opérations prédéfinie comprend :
l'acquisition d'une seconde durée, dans lequel la seconde durée est un temps à l'issue duquel un signal d'opération(s) sur une poignée prédéfinie est reçu ;
la détermination de si la seconde durée est ou non plus longue qu'un second seuil de durée prédéfini ;
s'il en est ainsi, la réalisation d'une opération de réveil et la commutation dans un mode de réinitialisation de mot de passe ;
la réception d'une information de séquence d'opérations sur poignée ; et
la considération de l'information de séquence d'opérations sur poignée en tant que séquence d'opérations prédéfinie et le stockage de l'information de séquence d'opérations sur poignée.

8. Procédé pour commander le véhicule au niveau de sa conduite selon la revendication 7, dans lequel la séquence d'opérations prédéfinie consiste à effectuer une ou des opération(s) sur une poignée de portière de conducteur principal, à effectuer une ou des opération(s) sur une poignée de portière de passager avant et à effectuer une ou des opération(s) sur la poignée de portière de conducteur principal.

9. Procédé pour commander le véhicule au niveau de sa conduite selon la revendication 5, dans lequel un processus de génération de la séquence d'opérations prédéfinie comprend :
la commande de l'ordinateur de véhicule afin qu'il affiche l'interface d'entrée d'information d'opération(s) ;
l'acquisition d'une séquence d'opérations prédéfinie originale qui est entrée sur l'interface d'entrée d'information d'opération(s) et la vérification de la séquence d'opérations prédéfinie originale ; et
si la vérification est effectuée avec succès, l'acquisition de la séquence d'opérations prédéfinie qui est entrée sur l'interface d'entrée d'information d'opération(s) et le stockage de la séquence d'opérations prédéfinie.

10. Procédé pour commander le véhicule au niveau de sa conduite selon la revendication 1, dans lequel, après l'étape d'envoi (S45) de l'instruction d'autorisation de conduite de véhicule à l'unité de commande de conduite de véhicule sur le véhicule, le procédé comprend en outre :
(S46) la commande du véhicule afin qu'il réalise une opération de mise à l'arrêt lorsqu'une instruction d'opération d'arrêt est reçue ;
(S47) la détermination de si une information d'opération(s) sur portière qui a été reçue après que le véhicule a été coupé est une information d'opération(s) prédéfinie ;
(S48) s'il en est ainsi, le démarrage d'une temporisation ; et
(S49) la commande d'une portière du véhicule afin de la verrouiller et de sortir du mode de démarrage sans clé après que la temporisation a atteint un temps prédéfini.

11. Procédé pour commander le véhicule au niveau de sa conduite selon la revendication 1, dans lequel le procédé est appliqué à un contrôleur dans le véhicule et le contrôleur est un contrôleur de domaine électronique de corps, un système intelligent d'entrée et de démarrage, un module de commande de moteur thermique ou un contrôleur de domaine.

12. Dispositif pour commander un véhicule au niveau de sa conduite, comprenant :
un module de commutation de mode (11) configuré pour effectuer une commutation dans un mode de démarrage sans clé lorsqu'une condition de démarrage sans clé prédéfinie est déterminée comme devant être satisfaite ;
un module de commande de démarrage (12) configuré pour commander le véhicule afin qu'il réalise une opération de démarrage conformément à une instruction de démarrage sans clé reçue ;
un module de vérification d'identité (13) configuré pour effectuer une vérification d'identité d'un conducteur dans le véhicule après que le véhicule a été démarré avec succès ; et
un module de commande de conduite (14) configuré pour envoyer, si la vérification d'identité est positive, une instruction d'autorisation de conduite de véhicule à une unité de commande de conduite de véhicule sur le véhicule de telle sorte que l'unité de commande de conduite de véhicule réponde à une instruction de conducteur du conducteur, et pour commander le véhicule au niveau de sa conduite conformément à l'instruction de conducteur ;
**caractérisé en ce que** :
le module de commutation de mode (11) inclut :
un sous-module de détermination de déverrouillage configuré pour déterminer si la portière du véhicule est ou non déverrouillée ; et
un sous-module de détermination de condition configuré pour déterminer si la condition de démarrage sans clé prédéfinie est ou non satisfaite si la portière du véhicule est déverrouillée.

13. Dispositif pour commander un véhicule au niveau de sa conduite selon la revendication 12, dans lequel :
le sous-module de détermination de déverrouillage inclut :
une unité de réception d'information configurée pour recevoir une information d'opération(s) sur poignée de portière du véhicule, l'information d'opération(s) sur poignée de portière incluant une séquence d'opérations et un temps d'opération(s) sur la poignée de portière ;
une unité de calcul d'intervalle configurée pour calculer un intervalle de temps de temps d'opération(s) adjacents ;
une unité de détermination configurée pour déterminer si la séquence d'opérations est ou non une séquence d'opérations prédéfinie et si tous les intervalles de temps sont ou non à l'intérieur d'un intervalle de temps prédéfini ;
une unité de commande de déverrouillage configurée pour commander la portière du véhicule afin de la déverrouiller si la séquence d'opérations est la séquence d'opérations prédéfinie et que tous les intervalles de temps sont à l'intérieur de l'intervalle de temps prédéfini ; et
une unité de détermination de déverrouillage configurée pour déterminer si la portière du véhicule est ou non déverrouillée avec succès.

14. Dispositif électronique, comprenant : une mémoire et un processeur, dans lequel :
la mémoire est utilisée pour stocker des programmes ; et
le processeur est configuré pour forcer le dispositif selon la revendication 12 à exécuter le procédé pour commander un véhicule au niveau de sa conduite selon l'une quelconque des revendications 1 à 11.

15. Véhicule comprenant le dispositif électronique selon la revendication 14, dans lequel le dispositif électronique est un contrôleur dans le véhicule et le contrôleur est un contrôleur de domaine électronique de corps, un système intelligent d'entrée et de démarrage, un module de commande de moteur thermique ou un contrôleur de domaine.
